# EUROPÄISCHE PATENTSCHRIFT

(11) **EP 4 077 061 B1**
(45) Veröffentlichungstag und Bekanntmachung des Hinweises auf die Patenterteilung: **27.12.2023**
(21) Anmeldenummer: 20800809.4
(22) Anmeldetag: 26.10.2020
(51) Int. Cl.: B60R 21/207, B60N 2/427, B60N 2/56, B60R 21/231

(54) **LUFTSACK FÜR EINE AIRBAGANORDNUNG UND AIRBAGANORNDUNG EINES FAHRZEUGSITZES**
AIRBAG FOR AN AIRBAG ARRANGEMENT AND AIRBAG ARRANGEMENT OF A VEHICLE SEAT
COUSSIN DE SÉCURITÉ GONFLABLE POUR UN AGENCEMENT DE COUSSIN DE SÉCURITÉ GONFLABLE, ET AGENCEMENT DE COUSSIN DE SÉCURITÉ GONFLABLE D'UN SIÈGE DE VÉHICULE

(30) Priorität: 16.12.2019 DE 102019134482
(43) Veröffentlichungstag der Anmeldung: 26.10.2022
(73) Patentinhaber: Audi AG, 85045 Ingolstadt (DE); ZF Automotive Germany GmbH, 73553 Alfdorf (DE)
(72) Erfinder: JAKOBS, Bernd, 90453 Nürnberg (DE); FÜRST, Franz, 85114 Buxheim (DE); KRÖNES, Walter, 85080 Gaimersheim (DE); GRUNDHEBER, Christoph, 85080 Gaimersheim (DE); EDELMANN, Niko, 85055 Ingolstadt (DE); FREISLER, Werner, 73529 Schwäbisch Gmünd (DE); WEIMER, Benjamin, 73565 Spraitbach (DE)
(86) Internationale Anmeldenummer: PCT/EP2020/080042
(87) Internationale Veröffentlichungsnummer: WO 2021/121742

(56) Entgegenhaltungen:
- EP-A1- 3 323 672
- JP-A- 2005 297 580
- JP-A- 2006 273 065
- JP-A- 2013 133 079
- US-A1- 2012 007 407
- US-A1- 2013 082 457
- US-A1- 2014 346 819

## Beschreibung

Die Erfindung betrifft einen Luftsack für eine Airbaganordnung eines Fahrzeugsitzes. Des Weiteren betrifft die Erfindung eine korrespondierende Airbaganordnung eines Fahrzeugs, mit einem solchen Luftsack.

Derzeit werden in Fahrzeugen Luftsäcke von Airbaganordnungen und Gurtbänder von Rückhaltevorrichtungen eingesetzt, um im Falle einer Kollision den Insassen in einer aufrechten Sitzposition ausreichend zu schützen. Um zukünftig die Insassen beim pilotierten Fahren das Einnehmen einer Komfortposition zu ermöglichen, sind neuartige Rückhaltesysteme und deren Integration im Fahrzeug erforderlich. Um den Insassen insbesondere in einer Komfortposition zu schützen, in welcher der Insasse beispielsweise eine waagrechte Liegeposition einnimmt, ist eine Ergänzung zusätzlicher Schutzvorrichtungen erforderlich. Darüber hinaus sollen bestehende Komfortausstattungen, wie z.B. Sitzheizung, Sitzbelüftung usw. beibehalten werden.

Luftsäcke, welche in einem Sitzkissen eines Fahrzeugsitzes angeordnet sind und eine aufblasbare Hülle aufweisen, sind in zahlreichen Variationen bekannt. Die aufblasbare Hülle kann in einem Ruhezustand zusammengefaltet im Sitzkissen und in einem Betriebszustand aufgeblasen im Sitzkissen angeordnet werden. Korrespondierende Airbaganordnungen mit einem solchen Luftsack sind ebenfalls in zahlreichen Variationen bekannt.

Aus der US 2012/0007407 A1 ist ein Fahrzeugsitz mit einer Airbaganordnung bekannt. Der Fahrzeugsitz umfasst ein Sitzkissen und eine Sitzlehne sowie eine im Sitzkissen angeordnete Airbaganordnung. Die innenliegende Airbaganordnung umfasst einen Gasgenerator und einen Luftsack, wobei der Gasgenerator den Luftsack in einer Unfallsituation aufbläst. Der Luftsack umfasst unterschiedliche Bereiche, wobei ein Bereich im aufgeblasenen Zustand eine größere Ausdehnung in Fahrzeughochrichtung aufweist als ein anderer Bereich. Durch diese Ausführung können die Beine eines auf dem Sitzkissen sitzenden bzw. liegenden Insassen in der Unfallsituation angehoben und ein Durchtauchen des Insassen unter dem Gurtband erschwert werden.

Aus der US 2014/0346819 A1 ist ein Fahrzeugsitz mit einer Airbaganordnung bekannt. Der Fahrzeugsitz umfasst ein Sitzkissen und eine Sitzlehne sowie eine im Sitzkissen angeordnete Airbaganordnung. Die innenliegende Airbaganordnung umfasst einen Gasgenerator und einen gattungsgemäßen Luftsack, wobei der Gasgenerator den Luftsack in einer Unfallsituation aufbläst. Der Luftsack umfasst ein einer Sitzfläche zugewandtes Oberteil und ein einem Fahrzeugboden zugewandtes Unterteil. Der Luftsack ist U-förmig oder O-förmig ausgeführt, wobei ein in Fahrtrichtung vorderer Bereich des Luftsacks im aufgeblasenen Zustand eine größere Ausdehnung in Fahrzeughochrichtung aufweisen kann als ein in Fahrtrichtung hinterer Bereich. Die Beine eines auf dem Sitzkissen sitzenden bzw. liegenden Insassen können durch den Luftsack in der Unfallsituation angehoben und ein Durchtauchen des Insassen unter dem Gurtband erschwert werden.

Als nachteilig kann bei den bekannten Luftsäcken für eine Airbaganordnung eines Fahrzeugsitzes angesehen werden, dass diese während des Aufblasvorgangs aufgrund des runden Querschnitts nur eine linienförmige Kraftübertragung ermöglichen, um die Oberschenkel und/oder einen Beckenbereich eines auf dem Fahrzeugsitz sitzenden Insassen anzuheben.

Aus der US 2013/0082457 A1 ist ein Luftsack für eine Airbaganordnung eines Fahrzeugsitzes, mit einer aufblasbaren Hülle bekannt, welche ein einer Sitzfläche zuwendbares Oberteil und ein einem Fahrzeugboden zuwendbares Unterteil umfasst, und welche in einem Ruhezustand zusammengefaltet und in einem Betriebszustand aufgeblasen ist. Die aufblasbare Hülle kann während des Aufblasvorgangs über das Oberteil eine Kraft in Oberschenkel und einen Beckenbereich eines auf dem Fahrzeugsitz sitzenden Insassen einleiten, um diese anzuheben. Die aufblasbare Hülle weist zwischen dem Unterteil und dem Oberteil mindestens eine Aussparung auf, durch welche ein Luftstrom leitbar ist, wobei das Oberteil und das Unterteil O-förmig ausgeführt sind.

Aus der EP 3 323 672 A1 ist ein Luftsack für einen Fahrzeugsitz bekannt, dessen Hinterteil in Fahrzeughochrichtung niedriger als das Vorderteil ausgeführt ist, sodass die Auflagefläche im aufgeblasenen Zustand der Hülle eine Neigung in Richtung Sitzlehne aufweist.

Aus der JP2006 273065 A ist ein Luftsack für eine Airbaganordnung eines Fahrzeugsitzes bekannt. Der Luftsack umfasst eine aufblasbare Hülle, welche ein einer Sitzfläche zugewandtes Oberteil und ein einem Fahrzeugboden zugewandtes Unterteil umfasst, und welche in einem Ruhezustand zusammengefaltet und in einem Betriebszustand aufgeblasen ist. Die aufblasbare Hülle leitet während des Aufblasvorgangs über das Oberteil eine Kraft in Oberschenkel und einen Beckenbereich eines auf dem Fahrzeugsitz sitzenden Insassen ein, um diese anzuheben. Die aufblasbare Hülle weist zwischen dem Unterteil und dem Oberteil mindestens eine Aussparung auf, durch welche ein Luftstrom leitbar ist. Ein Mantelteil und die faltbare Teile des Oberteils verbinden das Oberteil und das Unterteil der Hülle miteinander, wobei Form und Abmessungen des Mantelteils während des Aufblasvorgangs der Hülle eine Auflagefläche für die Oberschenkel und/oder den Beckenbereich des auf dem Fahrzeugsitz sitzenden Insassen vorgeben, sodass eine flächige Krafteinleitung zum Anheben der Oberschenkel und/oder des Beckenbereichs erfolgt.

Aus der DE 10 2017 223 557 A1 ist ein Komfortfahrzeugsitz mit einem Sitzkissenteil und einer Sitzlehne bekannt. Das Sitzkissenteil weist einen Sitzboden, ein Sitzpolster und einen zumindest abschnittsweise luftdurchlässigen Sitzbezug auf. Das Sitzkissenteil ist mit aufblasbaren Luftkammereinrichtungen versehen, die jeweils eine zumindest eine Blase bildende Wandungshaut aufweisen und die zwischen dem Sitzpolster und dem Sitzboden angeordnet sind. Das Sitzpolster weist zumindest einen Durchgangskanal zur Sitzbelüftung auf. Der Erfindung liegt die Aufgabe zu Grunde, einen Luftsack für eine Airbaganordnung eines Fahrzeugsitzes und eine korrespondierende Airbaganordnung bereitzustellen, welche eine aufblasbare Hülle umfassen, deren geometrische Form einfach angepasst werden kann und eine bessere Krafteinleitung zum Anheben der Oberschenkel und/oder des Beckenbereichs eines auf dem Fahrzeugsitz sitzenden Insassen ermöglicht, und eine Alternative zum Zusammenbau des Luftsacks angeben.

Diese Aufgabe wird durch einen Luftsack mit den Merkmalen des Patentanspruchs 1 und durch eine Airbaganordnung mit den Merkmalen des Patentanspruchs 8 gelöst. Vorteilhafte Ausgestaltungen mit zweckmäßigen Weiterbildungen der Erfindung sind in den abhängigen Patentansprüchen angegeben.

Um einen Luftsack für eine Airbaganordnung eines Fahrzeugsitzes und eine korrespondierende Airbaganordnung bereitzustellen, welche eine aufblasbare Hülle umfassen, deren geometrische Form einfach angepasst werden kann und eine bessere Krafteinleitung zum Anheben der Oberschenkel und/oder des Beckenbereichs eines auf dem Fahrzeugsitz sitzenden Insassen ermöglicht, verbindet mindestens ein Mantelteil ein Oberteil, über welches während des Aufblasvorgangs eine Kraft in die Oberschenkel und/oder den Beckenbereich eines auf dem Fahrzeugsitz sitzenden Insassen einleitbar ist, um diese anzuheben, und ein Unterteil einer Hülle des Luftsacks miteinander, wobei Form und Abmessungen des mindestens einen Mantelteils während des Aufblasvorgangs der Hülle eine Auflagefläche für die Oberschenkel und/oder den Beckenbereich des auf dem Fahrzeugsitz sitzenden Insassen vorgeben, sodass eine flächige Krafteinleitung zum Anheben der Oberschenkel und/oder des Beckenbereichs erfolgt. Das Oberteil ist O-förmig ausgeführt. Durch die O-Form können die Abmessungen der Durchgangsöffnung einfach vorgegeben bzw. an das Sitzmodell angepasst werden. Hierbei ist die Durchgangsöffnung bei der O-förmigen Ausführung des Oberteils und des Unterteils vollständig von der Hülle umschlossen.

Unter einem Luftsack wird im Folgenden eine Baugruppe mit einer aufblasbaren Hülle und mindestens einem Einlassventil verstanden, wobei der Luftsack in einem Sitzkissen eines Fahrzeugsitzes angeordnet ist. Der Luftsack verändert im Betriebszustand die Form des Sitzkissens so, dass ein Durchtauchen eines auf dem Sitzkissen sitzenden oder liegenden Insassen unter ein Gurtband zumindest erschwert oder verhindert wird. Die aufblasbare Hülle ist in einem Ruhezustand zusammengefaltet und in einem Betriebszustand aufgeblasen und gibt im Wesentlichen die Form des Luftsacks im Ruhezustand und im Betriebszustand vor. Hierbei weist in bevorzugten Ausführungsformen des Luftsacks in dem gefalteten Zustand lediglich das Mantelteil der Hülle eine Faltung auf und das Oberteil und das Unterteil liegen im Wesentlichen flach aufeinander. Das mindestens eine Mantelteil bewirkt im Vergleich zu einem Luftsack, welcher nur aus einem Oberteil und einem Unterteil besteht, dass die Höhe des aufgeblasenen Luftsacks unabhängig von dem Unterteil und/oder dem Oberteil vergrößert bzw. gesteuert werden kann. Über das Einlassventil kann das Fluid aus einer Aufblasvorrichtung in die Hülle eingebracht werden. Hierbei verändert sich eine Form des Sitzkissens. Die aufblasbare Hülle kann mit Verstärkungselementen verstärkt werden. Die Hülle umfasst zudem mindestens eine Aussparung, durch welche ein von einer Lüftungsanordnung erzeugter Luftstrom hindurch strömen kann.

Unter einer Airbaganordnung wird im Folgenden eine Baugruppe mit einem eine aufblasbare Hülle aufweisenden Luftsack verstanden. Die Hülle ist im Ruhezustand zusammengefaltet und im Betriebszustand aufgeblasen in einem Sitzkissen eines Fahrzeugsitzes angeordnet. Mindestens eine Aufblasvorrichtung bläst die aufblasbare Hülle des Luftsacks in einer Unfallsituation auf. Die Aufblasvorrichtung kann einen geeigneten Gasgenerator und geeigneter Verbindungselemente aufweisen. Zudem kann die Airbaganordnung mit Sensoren gekoppelt werden, welche beispielsweise eine Längsposition des Fahrzeugsitzes und/oder eine Neigung der Sitzlehne und/oder eine Unfallsituation erfassen.

Unter einem Fahrzeugsitz wird im Folgenden eine Baugruppe mit einem Sitzkissen und einer verstellbaren Sitzlehne verstanden, wobei im Sitzkissen mindestens ein Luftsack einer Airbaganordnung angeordnet ist. Zudem kann in dem Sitzkissen eine Aufblasvorrichtung für den mindestens einen Luftsack und/oder ein Sensor, welcher eine Belegung des Sitzkissens erfasst, angeordnet werden. Des Weiteren kann im Sitzkissen beispielsweise ein Lüftungsanordnung angeordnet werden, welche das Sitzkissen belüftet oder temperiert.

In vorteilhafter Weise können die geometrische Form und Abmessungen der aufblasbaren Hülle in einer in Fahrzeugquerrichtung und in Fahrzeuglängsrichtung aufgespannten Ebene durch das Oberteil und das Unterteil einfach vorgegeben werden. Die geometrische Form und Abmessungen der aufblasbaren Hülle in einer in Fahrzeugquerrichtung und Fahrzeughochrichtung aufgespannten Ebene und in einer in Fahrzeuglängsrichtung und Fahrzeughochrichtung aufgespannten Ebene können einfach durch das mindestens eine Mantelteil vorgegeben werden. Hierbei kann für jedes Sitzmodell einfach eine passende Hüllenform hergestellt werden. Zudem wird die Herstellung der Hülle in vorteilhafter Weise erleichtert, da die Form durch das Oberteil, das Unterteil und das mindestens eine Mantelteil klar definiert werden kann. Zudem können das Unterteil, das Oberteil und das mindestens eine Mantelteil einfach miteinander verbunden, beispielsweise zusammengenäht werden. Zudem bildet das Unterteil in vorteilhafter Weise einen Auflagebereich an der Unterseite der Hülle aus, sodass die Hülle stabil im Sitzkissen angeordnet werden kann. Das Oberteil bildet in vorteilhafter Weise eine Auflagefläche für die Oberschenkel und/oder den Beckenbereich des Insassen aus, wobei die Oberschenkel und/oder der Beckenbereich indirekt über die Sitzfläche des Sitzkissens auf der Auflagefläche der Hülle aufliegen. Durch die Auflagefläche und die damit verbundene flächige Krafteinleitung liegen die Oberschenkel und/oder der Beckenbereich während des Aufblasvorgangs stabil auf und können angehoben werden. Vorzugsweise kann das Oberteil der Hülle so dimensioniert werden, dass die Oberschenkel und/oder der Beckenbereich nicht seitlich von der Hülle bzw. von dem durch die Hülle angehobenen Bereich der Sitzfläche rutschen können. Dadurch kann in vorteilhafter Weise die Wahrscheinlichkeit erhöht werden, dass die Oberschenkel und/oder der Beckenbereich beim Aufblasen der Hülle angehoben werden. Durch die Formgebung des mindestens einen Mantelteils können eine ungewollte Verformung des Oberteils bzw. eine ungewollte Verformung des Unterteils und eine damit verbundene Reduzierung der Auflagefläche für die Oberschenkel und/oder den Beckenbereich in vorteilhafter Weise reduziert werden. Das mindestens eine Mantelteil bewirkt, dass die Höhe des aufgeblasenen Luftsacks unabhängig von dem Unterteil und/oder dem Oberteil vergrößert bzw. gesteuert werden kann. Über das mindestens eine Mantelteil kann insbesondere die Neigung des Oberteils der Hülle im aufgeblasenen Zustand vorgegeben werden. Hierbei kann die Neigung des Oberteils den Winkel zwischen den Oberschenkeln und/oder dem Beckenbereich und einem Oberkörper des Insassen vorgeben, sodass das Durchtauchen des auf dem Sitzkissen sitzenden oder liegenden Insassen unter ein Gurtband zumindest erschwert oder verhindert werden kann. In vorteilhafter Weise kann der von dem mindestens einen Lüftungsanordnung erzeugte Luftstrom durch die mindestens eine Aussparung der aufblasbaren Hülle des erfindungsgemäßen Luftsacks geleitet werden. Dadurch können in vorteilhafte Weise die Funktion des erfindungsgemäßen Luftsacks und die Funktion der mindestens einen Lüftungsanordnung miteinander kombiniert werden, sodass der Komfort für Insassen trotz erhöhter Sicherheit erhalten bleibt. Des Weiteren können die Funktionen der Lüftungsanordnung und die Funktionen einer korrespondierenden erfindungsgemäßen Airbaganordnung mit mindestens einem solchen erfindungsgemäßen Luftsack miteinander kombiniert werden. Dadurch kann der Insasse in vorteilhafter Weise in jeder Sitzposition geschützt werden, ohne auf den gewohnten Sitzkomfort durch die Lüftungsanordnung zu verzichten. Zudem kann der Luftsack im normalen Fahrbetrieb in vorteilhafter Weise flach zusammengefaltet und platzsparend im Sitzkissen angeordnet werden.

In vorteilhafter Ausgestaltung des erfindungsgemäßen Luftsacks, kann die aufblasbare Hülle im Bereich des mindestens einen Mantelteils und/oder des Unterteils mindestens eine Ausnehmung aufweisen, welche die aufgeblasene Hülle an eine Einbauumgebung im Fahrzeugsitz anpasst. So können das mindestens eine Mantelteil und das Unterteil im aufgeblasenen Zustand beispielsweise eine gemeinsame Einbuchtung aufweisen, durch welche ein im Wege befindliches Fahrzeugsitzbauteil umgangen werden kann. Dadurch kann der Luftsack beispielsweise an eine Abstützgeometrie im Fahrzeugsitz angepasst werden und trotzdem am Oberteil eine Auflagefläche zum Anheben der Oberschenkel und/oder des Beckenbereichs des Insassen zur Verfügung stellen.

In weiterer vorteilhafter Ausgestaltung des erfindungsgemäßen Luftsacks, kann das mindestens eine Mantelteil ein der Sitzlehne zugewandtes Hinterteil, ein dem Hinterteil gegenüberliegendes Vorderteil und mindestens zwei Seitenteile der Hülle ausbilden, wobei die mindestens zwei Seitenteile das Vorderteil mit dem Hinterteil verbinden. Hierbei kann das Mantelteil mehrteilig ausgeführt werden, beispielsweise können die Seitenteile, das Vorderteil und das Hinterteil einzeln ausgeschnitten und miteinander verbunden werden. Alternativ kann das Mantelteil einstückig ausgeführt werden, wobei verschiedene Abschnitte des Mantelteils die Seitenteile, das Vorderteil und das Hinterteil ausbilden. Zudem kann je nach geometrischer Form der Hülle, die Hülle mehrere Mantelteile aufweisen, welche nicht direkt miteinander verbunden sind. Hierbei sind keine Abnäher oder andere Elemente an dem Oberteil oder dem Unterteil erforderlich, um die Auflagefläche der Hülle zur flächigen Krafteinleitung zu erzielen, da durch das Mantelteil die Formen und Abmessungen so vorgegeben werden können, dass die flächige Auflagefläche der Hülle während des Aufblasvorgangs entsteht.

In weiterer vorteilhafter Ausgestaltung des erfindungsgemäßen Luftsacks, kann das Hinterteil in Fahrzeughochrichtung niedriger als das Vorderteil ausgeführt werden, sodass die Auflagefläche im aufgeblasenen Zustand der Hülle eine Neigung in Richtung Sitzlehne aufweist. Dadurch können die Oberschenkel und/oder der Beckenbereich in vorteilhafter Weise effektiv angehoben und ein Durchtauchen des auf dem Sitzkissen sitzenden oder liegenden Insassen unter das Gurtband zumindest erschwert oder verhindert werden.

In weiterer vorteilhafter Ausgestaltung des erfindungsgemäßen Luftsacks können die mindestens zwei Seitenteile jeweils zwei Schenkel aufweisen, welche unter einem spitzen Winkel aufeinander zulaufen, wobei ein erster Schenkel mit dem Oberteil und zweiter Schenkel mit dem Unterteil verbunden ist. Durch diese Ausgestaltung der Seitenteile kann eine keilförmige Neigung der Auflagefläche in vorteilhafter Weise einfach umgesetzt werden, da der Winkel zwischen den Schenkeln dem Neigungswinkel des Oberteils entspricht. Das Oberteil bildet eine Schräge bzw. eine Rampe in Keilform aus. Die Länge der Schenkel und der Winkel zwischen den Schenkeln können die Neigung der Schräge bzw. der Rampe vorgeben.

In weiterer vorteilhafter Ausgestaltung des erfindungsgemäßen Luftsacks, kann die mindestens eine Aussparung als Durchgangsöffnung ausgeführt werden, wobei die aufblasbare Hülle die Durchgangsöffnung vollständig umschließen kann. Beispielsweise kann die Hülle O-förmig ausgeführt und die Durchgangsöffnung mittig an der Hülle angeordnet werden, wobei die Durchgangsöffnung vollständig von der Hülle umgeben ist. In vorteilhafter Weise kann ein Luftstrom der Lüftungsanordnung durch die Durchgangsöffnung der Hülle geleitet werden.

In weiterer vorteilhafter Ausgestaltung des erfindungsgemäßen Luftsacks, kann die aufblasbare Hülle bei der O-förmigen Ausführung zwei Mantelteile aufweisen, wobei ein äußeres Mantelteil zwei äußere Seitenteile, ein durchgängiges Hinterteil und ein durchgängiges Vorderteil ausbildet. Ein inneres Mantelteil bildet zwei innere Seitenteile ein inneres Hinterteil und ein inneres Vorderteil aus. Hierbei bildet das innere Mantelteil die die Durchgangsöffnung begrenzende Wandung aus.

In vorteilhafter Ausgestaltung der erfindungsgemäßen Airbaganordnung kann die mindestens eine Aussparung den von der Lüftungsanordnung erzeugten Luftstrom zu einer Sitzfläche des Sitzkissens leiten. Dadurch kann in vorteilhafter Weise eine einfache und direkte Belüftung oder Temperierung des Sitzkissens ohne Zusatzbauteile erfolgen. Beispielsweise kann der Luftstrom auf einer Unterseite der Sitzfläche auftreffen und durch ein Sitzkissenmaterial strömen und aus der Sitzfläche austreten.

Die für den erfindungsgemäßen Luftsack beschriebenen Vorteile und bevorzugten Ausführungsformen gelten auch für die erfindungsgemäße Airbaganordnung.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Ausführungsbeispiele der Erfindung sind in der Zeichnung dargestellt und werden in der nachfolgenden Beschreibung näher erläutert. In der Zeichnung bezeichnen gleiche Bezugszeichen Komponenten bzw. Elemente, die gleiche bzw. analoge Funktionen ausführen. Hierbei zeigen:
- Fig. 1: eine schematische perspektivische Darstellung eines Ausführungsbeispiels eines nicht erfindungsgemäßen Luftsacks in einem aufgeblasenen Betriebszustand;
- Fig. 2: eine schematische Darstellung eines Mantelteils des Luftsacks aus Fig. 1;
- Fig. 3: eine schematische Draufsicht eines Ausführungsbeispiels des erfindungsgemäßen Luftsacks;
- Fig. 4: eine schematische Darstellung eines inneren Mantelteils des Luftsacks aus Fig. 3;
- Fig. 5: eine schematische Darstellung eines äußeren Mantelteils des Luftsacks aus Fig. 3; und
- Fig. 6: eine schematisches Blockdiagramm eines Ausführungsbeispiels einer erfindungsgemäßen Airbaganordnung eines Fahrzeugsitzes.

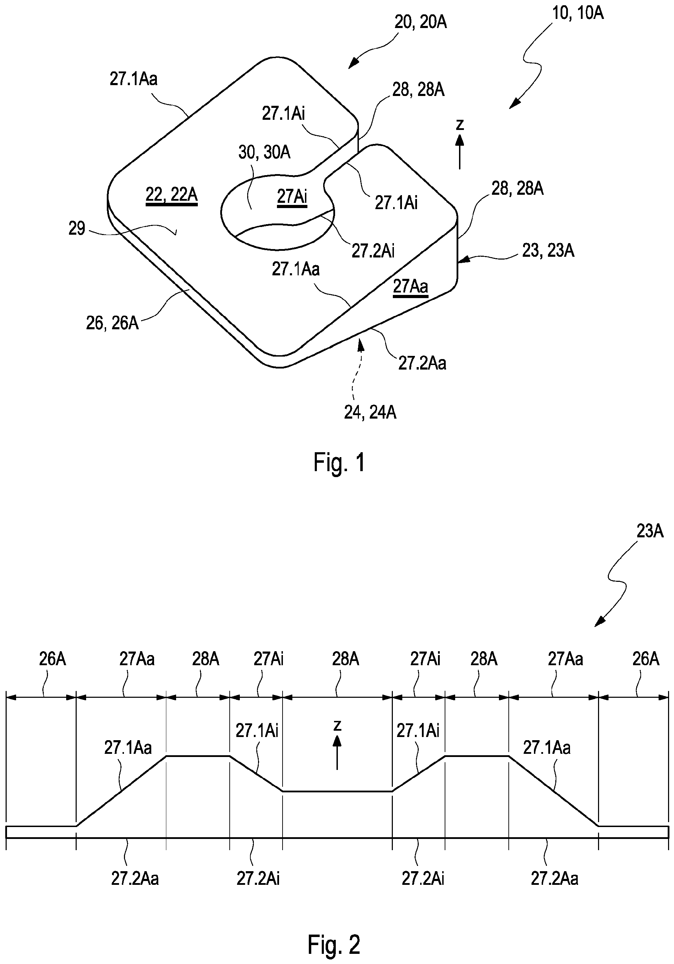

Wie aus Fig. 1 bis 5 ersichtlich ist, umfasst ein Luftsack 10, 10A, 10B für eine Airbaganordnung 40 eines Fahrzeugsitzes 50 eine aufblasbare Hülle 20, 20A, 20B, welche ein einer Sitzfläche zugewandtes Oberteil 22, 22A, 22B und ein einem Fahrzeugboden zugewandtes Unterteil 24, 24A, 24B aufweist. Die aufblasbare Hülle 20, 20A, 20B ist in einem Ruhezustand zusammengefaltet und in einem Betriebszustand aufgeblasen, wobei die aufblasbare Hülle 20, 20A, 20B während des Aufblasvorgangs über das Oberteil 22, 22A, 22B eine Kraft in Oberschenkel und/oder einen Beckenbereich eines auf dem Fahrzeugsitz 50 sitzenden Insassen einleitet, um diese anzuheben. Zudem weist die aufblasbare Hülle 20, 20A, 20B zwischen dem Unterteil 24, 24A, 24B und dem Oberteil 22, 22A, 22B mindestens eine Aussparung 30 auf, durch welchen ein Luftstrom 32 leitbar ist.

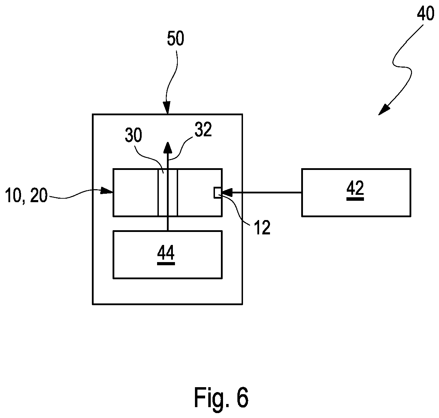

Wie aus Fig. 6 ersichtlich ist, umfasst eine korrespondierende Airbaganordnung 40 den die aufblasbare Hülle 20, 20A, 20B aufweisenden Luftsack 10, wobei die aufblasbare Hülle 20, 20A, 20B in einem Ruhezustand zusammengefaltet und in einem Betriebszustand aufgeblasen in einem Sitzkissen des Fahrzeugsitzes 50 angeordnet ist, wobei mindestens eine Aufblasvorrichtung 42 die aufblasbare Hülle 20, 20A, 20B des Luftsacks 10 in einer Unfallsituation aufbläst

Hierbei verbindet mindestens ein Mantelteil 23, 23A, 23Ba, 23Bi das Oberteil 22, 22A, 22B und das Unterteil 24, 24A, 24B der Hülle 20, 20A, 20B miteinander, wobei Form und Abmessungen des mindestens einen Mantelteils 23, 23A, 23Ba, 23Bi während des Aufblasvorgangs der Hülle 20, 20A, 20B eine Auflagefläche 29 für die Oberschenkel und/oder den Beckenbereich des auf dem Fahrzeugsitz sitzenden Insassen vorgeben, sodass eine flächige Krafteinleitung zum Anheben der Oberschenkel und/oder des Beckenbereichs erfolgt.

Wie aus Fig. 6 weiter ersichtlich ist, kann die Aufblasvorrichtung 42 einen Gasgenerator umfassen, welcher in einem Sitzgestell des Fahrzeugsitzes 50 angeordnet ist, wobei das freigesetzte Fluid beispielsweise mittels einer Gaslanze oder einer anderen geeigneten Gaszuführung, wie beispielsweise einem Gewebeschlauch oder ähnlichem, zum Luftsack 10, 10A, 10B geführt werden kann. In einem alternativen Ausführungsbeispiel kann der Gasgenerator im Luftsack 10, 10A, 10B integriert werden. Die mindestens eine Aussparung 30 der Hülle 20, 20A, 20B leitet den von einer Lüftungsanordnung 44 erzeugten Luftstrom 32 zu der Sitzfläche des Sitzkissens. Hierbei wird insbesondere eine Unterseite der Sitzfläche 14 angeströmt und der Luftstrom 32 kann aus der Sitzfläche austreten. Die dargestellte erfindungsgemäße Airbaganordnung 40 weist neben der Aufblasvorrichtung 42 nicht dargestellte Sensoren auf. Diese Sensoren können beispielsweise eine Längsposition des Fahrzeugsitzes und/oder eine Neigung der Sitzlehne erfassen. Des Weiteren können Sensoren vorgesehen werden, welche erfassen, ob der Fahrzeugsitz 50 durch einen Insassen belegt ist. Bei einem unbelegten Fahrzeugsitz 50 kann auf ein Auslösen des erfindungsmäßen Luftsacks 10, 10A, 10B in einer Unfallsituation verzichtet werden. Auch bei einem Fahrzeugsitz in einer Normalposition mit aufgerichteter Sitzlehne, kann auf eine Auslösung des erfindungsmäßen Luftsacks 10, 10A, 10B in einer Unfallsituation verzichtet werden. Zudem können nicht dargestellte Umfeldsensoren eine Unfallsituation erkennen und die Aufblasvorrichtung 42 aktivieren.

Wie aus Fig. 1 bis 5 weiter ersichtlich ist, gibt die Form der Hülle 20, 20A, 20B die Form des Luftsacks 10, 10A, 10B vor. An der Hülle 20, 20A, 20B können Verstärkungselemente oder ein Einlassventil 12 angeordnet werden, welches die Aufblasvorrichtung 42 mit der aufblasbaren Hülle 20, 20A, 20B koppelt. Die Abmessungen des Oberteils 22, 22A, 22B und des Unterteils 24, 24A, 24B sind an Abmessungen des korrespondierenden Sitzkissens angepasst.

Wie aus Fig. 1 bis 5 weiter ersichtlich ist, bildet das mindestens eine Mantelteil 23, 23A, 23Ba, 23Bi ein einer Sitzlehne zugewandtes Hinterteil 26, 26A, 26Ba, 26Bi, ein dem Hinterteil 26, 26A, 26Ba, 26Bi gegenüberliegendes Vorderteil 28, 28A, 28Ba, 28Bi und mindestens zwei Seitenteile 27Aa, 27Ai, 27Ba, 27Bi der Hülle 20, 20A, 20B aus, wobei die mindestens zwei Seitenteile 27Aa, 27Ai, 27Ba, 27Bi das Vorderteil 28, 28A, 28Ba, 28Bi mit dem Hinterteil 26, 26A, 26Ba, 26Bi verbinden. Hierbei gibt das mindestens eine Mantelteil 23, 23A, 23Ba, 23Bi die Form und die Abmessungen des aufgeblasenen Luftsacks 10, 10A, 10B in Fahrzeughochrichtung z vor. Somit bewirkt das mindestens eine Mantelteil 23, 23A, 23Ba, 23Bi, dass die Höhe des aufgeblasenen Luftsacks 10, 10A, 10B unabhängig von dem Unterteil 24, 24A, 24B und/oder dem Oberteil 22, 22A, 22B vergrößert bzw. gesteuert werden kann. Das jeweilige Hinterteil 26, 26A, 26Ba, 26Bi ist in Fahrzeughochrichtung z niedriger als das korrespondierende Vorderteil 28, 28A, 28Ba, 28Bi ausgeführt, sodass die Auflagefläche 29 im aufgeblasenen Zustand der Hülle 20, 20A, 20B eine Neigung in Richtung Sitzlehne aufweist. Durch den ausgebildeten Höhenunterschied zwischen dem Vorderteil 28, 28A, 28Ba, 28Bi und dem korrespondierenden Hinterteil 26, 26A, 26Ba, 26Bi werden auf dem Sitzkissen angeordnete Oberschenkel und/oder der Beckenbereich eines auf dem Sitzkissen liegenden oder sitzenden Insassen angehoben. Die mindestens zwei Seitenteile 27Aa, 27Ai, 27Ba, 27Bi weisen jeweils zwei Schenkel 27.1Aa, 27.2Aa, 27.1Ai, 27.2Ai, 27.1Ba, 27.1Bi, 27.2Ba, 27.2Bi auf, welche unter einem spitzen Winkel aufeinander zulaufen. Ein erster Schenkel 27.1Aa, 27.1Ai, 27.1Ba, 27.1Bi ist mit dem Oberteil 22, 22A, 22B und zweiter Schenkel 27.2Aa, 27.2Ai, 27.2Ba, 27.2Bi ist mit dem Unterteil 24, 24A, 24B verbunden. Der spitze Winkel zwischen den beiden Schenkeln 27.1Aa, 27.2Aa, 27.1Ai, 27.2Ai, 27.1Ba, 27.1Bi, 27.2Ba, 27.2Bi gibt die Neigung des Oberteils 22, 22A, 22B bzw. der Auflagefläche 29 des Oberteils 22, 22A, 22B vor. Das Unterteil 24, 24A, 24B bildet einen Auflagebereich aus, welcher eine Anpassung des Unterteil 24, 24A, 24B an die Einbaubedingungen im Fahrzeugsitz 50 ermöglicht.

In einem alternativen nicht dargestellten Ausführungsbeispiel weist die aufblasbare Hülle 20, 20A, 20B im Bereich des mindestens einen Mantelteils 23, 23A, 23Ba, 23Bi und/oder des Unterteils 24, 24A, 24B mindestens eine Ausnehmung auf, welche die aufgeblasene Hülle 20, 20A, 20B an eine Einbauumgebung im Fahrzeugsitz 50 anpasst. So können das mindestens eine Mantelteil 23, 23A, 23Ba, 23Bi und das Unterteil 24, 24A, 24B eine gemeinsame Einbuchtung aufweisen, durch welche ein im Wege befindliches Fahrzeugsitzbauteil umgangen werden kann. Dadurch kann der Luftsack 10, 10A, 10B beispielsweise an eine Abstützgeometrie im Fahrzeugsitz 50 angepasst werden und trotzdem am Oberteil 22, 22A, 22B und/oder Beckenbereich eine Auflagefläche zum Anheben der Oberschenkel und/oder des Beckenbereichs des Insassen zur Verfügung stellen. Auf der Auflagefläche 29 des Oberteils 22, 22A, 22B liegt eine Unterseite des Sitzkissens teilweise auf. Die Sitzfläche, auf welcher die Oberschenkel und/oder der Beckenbereich des Insassen aufliegen, ist über der Auflagefläche 29 des Oberteils 22, 22A, 22B angeordnet, sodass die Oberschenkel und/oder der Beckenbereich indirekt flächig auf der Auflagefläche 29 des Oberteils 22, 22A, 22B aufliegen und dadurch auch die Neigung des Oberteils 22, 22A, 22B aufweisen. Dadurch kann im aufgeblasenen Zustand der Hülle 20, 20A, 20B ein Durchtauchen des Insassen unter ein Gurtband zumindest erschwert oder verhindert werden.

Wie aus Fig. 1, 3 und 6 weiter ersichtlich ist, ist die mindestens eine Aussparung 30 als Durchgangsöffnung 30A, 30B ausgeführt, wobei die aufblasbare Hülle 20, 20A, 20B die Durchgangsöffnung 30A, 30B vollständig oder teilweise umschließt.

Das in Fig. 1 und 2 dargestellte Ausführungsbeispiel des Luftsacks 10, 10A umfasst ein U-förmiges Oberteil 22, 22A und ein U-förmiges Unterteil 24, 24A. Die U-Form umfasst hierbei zwei Schenkel, welche in Längsrichtung des Sitzkissens verlaufen und einen die beiden Schenkel verbindenden Steg, welcher in Querrichtung des Sitzkissens verläuft. Im dargestellten Ausführungsbeispiel ist die U-Form nach vorne offen. Das bedeutet, dass der Verbindungsteg benachbart zur Sitzlehne angeordnet ist und Endbereiche der beiden Schenkel von der Sitzlehne weg weisen. Das dargestellte Ausführungsbeispiel des Luftsacks 10, 10A weist ein Mantelteil 23, 23A auf, welches zwei äußere Seitenteile 27Aa, zwei innere Seitenteile 27Ai, ein durchgängiges Hinterteil 26A und ein mehrteiliges Vorderteil 28A ausbildet. In einem alternativen nicht dargestellten Ausführungsbeispiel ist die U-Form nach hinten offen. Das bedeutet, dass der Verbindungsteg benachbart zu einer vorderen Kante des Sitzkissen angeordnet ist und, dass die Endbereiche der beiden Schenkel zur Sitzlehne hin weisen. Hierbei bildet das Mantelteil zwei äußere Seitenteile 27Aa, zwei innere Seitenteile 27Ai, ein durchgängiges Vorderteil und ein mehrteiliges Hinterteil aus. Das mehrteilige Vorderteil 28A bzw. das mehrteilige Hinterteil umfassen jeweils zwei äußere Elemente und ein nach hinten versetztes zwischen den beiden äußeren Elementen angeordnetes mittleres Element. Die inneren Seitenteile 27Ai bilden eine die Durchgangsöffnung 30A begrenzende Wandung aus, wobei die Durchgangsöffnung 30A bei der U-förmigen Ausführung nur teilweise von der Hülle 20, 20A umgeben ist.

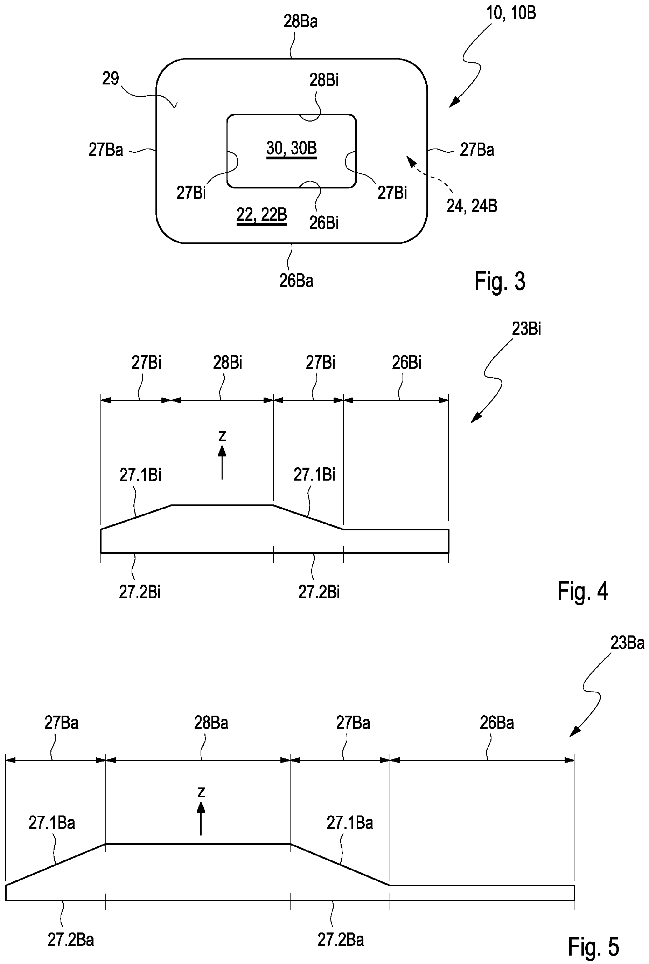

Das in Fig. 3 bis 5 dargestellte Ausführungsbeispiel des erfindungsgemäßen Luftsacks 10, 10B umfasst ein O-förmiges Oberteil 22, 22B und ein O-förmiges Unterteil 24, 24B. Zudem umfasst die Hülle 20, 20B des Ausführungsbeispiel des erfindungsgemäßen Luftsacks 10, 10B ein äußeres Mantelteil 23Ba, welches zwei äußere Seitenteile 27Ba, ein durchgängiges Hinterteil 26Ba und ein durchgängiges Vorderteil 28Ba ausbildet, und ein inneres Mantelteil 23Bi, welches zwei innere Seitenteile 27Bi, ein inneres Hinterteil 26Bi und ein inneres Vorderteil 28Bi ausbildet. Das innere Mantelteil 23Bi bildet eine die Durchgangsöffnung 30B begrenzende Wandung aus, wobei die Durchgangsöffnung 30B bei der O-förmigen Ausführung vollständig von der Hülle 20, 20B umgeben wird.

Durch den erfindungsmäße Luftsack 10, 10B und die erfindungsgemäße Airbaganordnung 40 kann der Insasse in jeder Sitzposition bestmöglich geschützt werden, ohne auf den gewohnten Sitzkomfort durch Temperierung bzw. Lüftung der Lüftungsanordnung 44 zu verzichten.

Durch die Mantelteile 23, 23Ba, 23Bi können die Auflagefläche 29 und die Neigung des Oberteils 22, 22B und eine Höhe der aufgeblasenen Hülle 20, 20B einfach vorgegeben und verschiedene Ausführungsformen einfach umgesetzt werden.

### BEZUGSZEICHENLISTE

- 10, 10A, 10B: Luftsack
- 12: Einlassventil
- 20, 20A, 20B: aufblasbare Hülle
- 22, 22A, 22B: Oberteil
- 23, 23A, 23Ba, 23Bi: Mantelteil
- 24, 24A, 24B: Unterteil
- 26, 26A, 26Ba, 26Bi: Hinterteil
- 27Aa, 27Ba: äußeres Seitenteil
- 27Ai, 27Bi: inneres Seitenteil
- 27.1Aa, 27.1Ai, 27.1Ba, 27.1Bi: erster Schenkel
- 27.2Aa, 27.2Ai, 27.2Ba, 27.2Bi: zweiter Schenkel
- 28, 28A, 28Ba, 28Bi: Vorderteil
- 29: Auflagefläche
- 30: Aussparung
- 30A, 30B: Durchgangsöffnung
- 32: Luftstrom
- 40: Airbaganordnung
- 42: Aufblasvorrichtung
- 44: Lüftungsanordnung
- 50: Fahrzeugsitz

## Patentansprüche

1. Luftsack (10, 10B) für eine Airbaganordnung (40) eines Fahrzeugsitzes (50), mit einer aufblasbaren Hülle (20, 20B), welche ein einer Sitzfläche zuwendbares Oberteil (22, 22B) und ein einem Fahrzeugboden zuwendbares Unterteil (24, 24B) umfasst, und welche in einem Ruhezustand zusammengefaltet und in einem Betriebszustand aufgeblasen ist, wobei die aufblasbare Hülle (20, 20B) während des Aufblasvorgangs über das Oberteil (22, 22B) eine Kraft in Oberschenkel und/oder einen Beckenbereich eines auf dem Fahrzeugsitz (50) sitzenden Insassen einleitet, um diese anzuheben, und wobei die aufblasbare Hülle (20, 20B) zwischen dem Unterteil (24, 24B) und dem Oberteil (22, 22B) mindestens eine Aussparung (30) aufweist, durch welchen ein Luftstrom (32) leitbar ist, wobei das Oberteil (22, 22B) und das Unterteil (24, 24B) O-förmig ausgeführt sind, **dadurch gekennzeichnet, dass** mindestens ein Mantelteil (23, 23Ba, 23Bi) das Oberteil (22, 22B) und das Unterteil (24, 24B) der Hülle (20, 20B) miteinander verbindet, wobei Form und Abmessungen des mindestens einen Mantelteils (23, 23Ba, 23Bi) während des Aufblasvorgangs der Hülle (20, 20B) eine Auflagefläche (29) für die Oberschenkel und/oder den Beckenbereich des auf dem Fahrzeugsitz sitzenden Insassen vorgeben, sodass eine flächige Krafteinleitung zum Anheben der Oberschenkel und/oder des Beckenbereichs erfolgt.

2. Luftsack (10, 10B) nach Anspruch 1,
**dadurch gekennzeichnet, dass**
die aufblasbare Hülle (20, 20B) im Bereich des mindestens einen Mantelteils (23, 23Ba, 23Bi) und/oder des Unterteils (24, 24B) mindestens eine Ausnehmung aufweist, welche die aufgeblasene Hülle (20, 20B) an eine Einbauumgebung im Fahrzeugsitz anpasst.

3. Luftsack (10, 10B) nach Anspruch 1 oder 2,
**dadurch gekennzeichnet, dass**
das mindestens eine Mantelteil (23, 23Ba, 23Bi) ein einer Sitzlehne zuwendbares Hinterteil (26, 26Ba, 26Bi), ein dem Hinterteil (26, 26Ba, 26Bi) gegenüberliegendes Vorderteil (28, 28Ba, 28Bi) und mindestens zwei Seitenteile (27Ba, 27Bi) der Hülle (20, 20B) ausbildet, wobei die mindestens zwei Seitenteile (27Ba, 27Bi) das Vorderteil (28Ba, 28Bi) mit dem Hinterteil (26Ba, 26Bi) verbinden.

4. Luftsack (10, 10B) nach Anspruch 3,
**dadurch gekennzeichnet, dass**
das Hinterteil (26, 26Ba, 26Bi) in Fahrzeughochrichtung (z) niedriger als das Vorderteil (28, 28Ba, 28Bi) ausgeführt ist, sodass die Auflagefläche (29) im aufgeblasenen Zustand der Hülle (20, 20B) eine Neigung in Richtung Sitzlehne aufweist.

5. Luftsack (10, 10B) nach einem der Ansprüche 3 oder 4,
**dadurch gekennzeichnet, dass**
die mindestens zwei Seitenteile (27Ba, 27Bi) jeweils zwei Schenkel (27.1Ba, 27.1Bi, 27.2Ba, 27.2Bi) aufweisen, welche unter einem spitzen Winkel aufeinander zulaufen, wobei ein erster Schenkel (27.1Ba, 27.1Bi) mit dem Oberteil (22, 22B) und ein zweiter Schenkel (27.2Ba, 27.2Bi) mit dem Unterteil (24, 24B) verbunden ist.

6. Luftsack (10, 10B) nach einem der Ansprüche 1 bis 5,
**dadurch gekennzeichnet, dass**
die mindestens eine Aussparung (30) als Durchgangsöffnung (30B) ausgeführt ist, wobei die aufblasbare Hülle (20, 20B) die Durchgangsöffnung (30B) vollständig umschließt.

7. Luftsack (10, 10B) nach einem der Ansprüche 1 bis 6,
**dadurch gekennzeichnet, dass**
die aufblasbare Hülle (20, 20B) bei dem O-förmigen Oberteil (22, 22B) und dem O-förmigen Unterteil (24, 24B) zwei Mantelteile (23Ba, 23Bi) aufweist, wobei ein äußeres Mantelteil (23Ba) zwei äußere Seitenteile (27Ba), ein durchgängiges Hinterteil (26Ba) und ein durchgängiges Vorderteil (28Ba) ausbildet, und ein inneres Mantelteil (23Bi) zwei innere Seitenteile (27Bi), ein inneres Hinterteil (26Bi) und ein inneres Vorderteil (28Bi) ausbildet.

8. Airbaganordnung (40) für einen Fahrzeugsitz (50), mit einem eine aufblasbare Hülle (20) aufweisenden Luftsack (10), wobei die aufblasbare Hülle (20) in einem Ruhezustand zusammengefaltet und in einem Betriebszustand aufgeblasen in einem Sitzkissen des Fahrzeugsitzes (50) angeordnet ist, wobei mindestens eine Aufblasvorrichtung (42) die aufblasbare Hülle (20) des Luftsacks 10 in einer Unfallsituation aufbläst,
**dadurch gekennzeichnet, dass**
der Luftsack (10) nach einem der Ansprüche 1 bis 7 ausgeführt ist.

9. Airbaganordnung nach Anspruch 8,
**dadurch gekennzeichnet, dass**
die mindestens eine Aussparung (30) den von der Lüftungsanordnung (44) erzeugten Luftstrom (32) zu einer Sitzfläche des Sitzkissens leitet.

## Claims

1. Air bag (10, 10B) for an airbag arrangement (40) of a vehicle seat (50), having an inflatable cover (20, 20B), which comprises an upper part (22, 22B) facing a seat surface and a lower part (24, 24B) facing a vehicle floor, and which is folded up in a standby state and inflated in an operational state, wherein the inflatable cover (20, 20B) applies a force via the upper part (22, 22B) to the thighs and/or a pelvic region of an occupant sitting on the vehicle seat (50) during the inflation process in order to lift them, and wherein the inflatable cover (20, 20B) has at least one cut-out (30) between the lower part (24, 24B) and the upper part (22, 22B), through which an air current (32) can be guided, wherein the upper part (22, 22B) and the lower part (24, 24B) are O-shaped, **characterised in that** at least one casing part (23, 23Ba, 23Bi) connects the upper part (22, 22B) and the lower part (24, 24B) of the cover (20, 20B), wherein the form and dimensions of the at least one casing part (23, 23Ba, 23Bi) during the inflation process of the cover (20, 20B) provide a support surface (29) for the thighs and/or the pelvic region of the occupant sitting on the vehicle seat so that a planar force is applied for lifting the thighs and/or the pelvic region.

2. Air bag (10, 10B) according to claim 1,
**characterised in that**
the inflatable cover (20, 20B) has at least one cut-out in the region of the at least one casing part (23, 23Ba, 23Bi) and/or the lower part (24, 24B), which cut-out adapts the inflated cover (20, 20B) to an installation environment in the vehicle seat.

3. Air bag (10, 10B) according to claim 1 or 2,
**characterised in that**
the at least one casing part (23, 23Ba, 23Bi) forms a rear part (26, 26Ba, 26Bi) facing a seat backrest, a front part (28, 28Ba, 28Bi) opposite the rear part (26, 26Ba, 26Bi) and at least two side parts (27Ba, 27Bi) of the cover (20, 20B), wherein the at least two side parts (27Ba, 27Bi) connect the front part (28Ba, 28Bi) to the rear part (26Ba, 26Bi).

4. Air bag (10, 10B) according to claim 3,
**characterised in that**
the rear part (26, 26Ba, 26Bi) is lower than the front part (28, 28Ba, 28Bi) in the vertical direction of the vehicle (z), so that the support surface (29) has an inclination in the direction of the seat backrest when the cover (20, 20B) is inflated.

5. Air bag (10, 10B) according to any one of claims 3 or 4,
**characterised in that**
the at least two side parts (27Ba, 27Bi) each have two legs (27.1Ba, 27.1Bi, 27.2Ba, 27.2Bi) which converge at an acute angle, a first leg (27.1Ba, 27.1Bi) being connected to the upper part (22, 22B) and a second leg (27.2Ba, 27.2Bi) being connected to the lower part (24, 24B).

6. Air bag (10, 10B) according to any one of claims 1 to 5,
**characterised in that**
the at least one cut-out (30) is configured as a through opening (30B), wherein the inflatable cover (20, 20B) completely surrounds the through opening (30B).

7. Air bag (10, 10B) according to any one of claims 1 to 6,
**characterised in that**
the inflatable cover (20, 20B) has two casing parts (23Ba, 23Bi) in the O-shaped upper part (22, 22B) and the O-shaped lower part (24, 24B), wherein an outer casing part (23Ba) forms two outer side parts (27Ba), a continuous rear part (26Ba) and a continuous front part (28Ba), and an inner casing part (23Bi) forms two inner side parts (27Bi), an inner rear part (26Bi) and an inner front part (28Bi).

8. Airbag arrangement (40) for a vehicle seat (50), with an air bag (10) having an inflatable cover (20), wherein the inflatable cover (20) folded up in a standby state and inflated in an operational state is arranged in a seat cushion of the vehicle seat (50), wherein at least one inflation device (42) inflates the inflatable cover (20) of the air bag (10) in the even of an accident, **characterised in that** the air bag (10) is configured according to any one of claims 1 to 7.

9. Airbag arrangement according to claim 8,
**characterised in that**
the at least one cut-out (30) directs the air flow (32) generated by the ventilation arrangement (44) to a seat surface of the seat cushion.

## Revendications

1. Coussin pneumatique (10, 10B) pour un agencement d'airbag (40) d'un siège de véhicule (50), avec une enveloppe gonflable (20, 20B) qui comprend une partie supérieure (22, 22B) orientable vers une surface d'assise et une partie inférieure (24, 24B) orientable vers un plancher de véhicule, et qui est pliée dans un état de repos et gonflée dans un état de fonctionnement, dans lequel l'enveloppe gonflable (20, 20B) introduit une force dans les cuisses et/ou une zone du bassin d'un occupant assis sur le siège de véhicule (50) pendant le processus de gonflage par l'intermédiaire de la partie supérieure (22, 22B) afin de les soulever, et dans lequel l'enveloppe gonflable (20, 20B) présente au moins un évidement (30) entre la partie inférieure (24, 24B) et la partie supérieure (22, 22B), à travers lequel un flux d'air (32) peut être conduit, dans lequel la partie supérieure (22, 22B) et la partie inférieure (24, 24B) sont en forme de O, **caractérisé en ce qu'**au moins une partie périphérique (23, 23Ba, 23Bi) connecte la partie supérieure (22, 22B) et la partie inférieure (24, 24B) de l'enveloppe (20, 20B), dans lequel la forme et les dimensions de l'au moins une partie périphérique (23, 23Ba, 23Bi) définissent, pendant le processus de gonflage de l'enveloppe (20, 20B), une surface d'appui (29) pour les cuisses et/ou la zone du bassin de l'occupant assis sur le siège de véhicule, de sorte qu'une introduction de force plane pour soulever les cuisses et/ou la zone du bassin se produit.

2. Coussin pneumatique (10, 10B) selon la revendication 1,
**caractérisé en ce que**
l'enveloppe gonflable (20, 20B) présente, dans la zone de l'au moins une partie périphérique (23, 23Ba, 23Bi) et/ou de la partie inférieure (24, 24B), au moins un évidement qui adapte l'enveloppe gonflée (20, 20B) à un environnement de montage dans le siège de véhicule.

3. Coussin pneumatique (10, 10B) selon la revendication 1 ou 2,
**caractérisé en ce que**
l'au moins une partie périphérique (23, 23Ba, 23Bi) forme une partie arrière (26, 26Ba, 26Bi) orientable vers un dossier de siège, une partie avant (28, 28Ba, 28Bi) opposée à la partie arrière (26, 26Ba, 26Bi) et au moins deux parties latérales (27Ba, 27Bi) de l'enveloppe (20, 20B), dans lequel les au moins deux parties latérales (27Ba, 27Bi) connectent la partie avant (28Ba, 28Bi) à la partie arrière (26Ba, 26Bi).

4. Coussin pneumatique (10, 10B) selon la revendication 3,
**caractérisé en ce que**
la partie arrière (26, 26Ba, 26Bi) est réalisée plus basse que la partie avant (28, 28Ba, 28Bi) dans le sens de la hauteur (z) du véhicule, de sorte que la surface d'appui (29) présente une inclinaison en direction du dossier de siège à l'état gonflé de l'enveloppe (20, 20B).

5. Coussin pneumatique (10, 10B) selon l'une quelconque des revendications 3 ou 4,
**caractérisé en ce que**
les au moins deux parties latérales (27Ba, 27Bi) présentent respectivement deux branches (27.1 Ba, 27.1Bi, 27.2Ba, 27.2Bi) qui se rejoignent sous un angle aigu, dans lequel une première branche (27.1 Ba, 27.1Bi) est connectée à la partie supérieure (22, 22B) et une seconde branche (27.2Ba, 27.2Bi) à la partie inférieure (24, 24B).

6. Coussin pneumatique (10, 10B) selon l'une quelconque des revendications 1 à 5,
**caractérisé en ce que**
le au moins un évidement (30) est réalisé en tant qu'ouverture traversante (30B), dans lequel l'enveloppe gonflable (20, 20B) renferme entièrement l'ouverture traversante (30B).

7. Coussin pneumatique (10, 10B) selon l'une quelconque des revendications 1 à 6,
**caractérisé en ce que**
l'enveloppe gonflable (20, 20B) présente, sur la partie supérieure (22, 22B) en forme de O et la partie inférieure (24, 24B) en forme de O, deux parties périphériques (23Ba, 23Bi), dans lequel une partie périphérique extérieure (23Ba) présente deux parties latérales extérieures (27Ba), une partie arrière continue (26Ba) et une partie avant continue (28Ba), et une partie périphérique intérieure (23Bi) forme deux parties latérales intérieures (27Bi), une partie arrière intérieure (26Bi) et une partie avant intérieure (28Bi).

8. Agencement d'airbag (40) pour un siège de véhicule (50), avec un coussin pneumatique (10) présentant une enveloppe gonflable (20), dans lequel l'enveloppe gonflable (20) est repliée dans un état de repos et disposée gonflée dans un état de fonctionnement dans un coussin de siège du siège de véhicule (50), dans lequel au moins un dispositif de gonflage (42) gonfle l'enveloppe gonflable (20) du coussin pneumatique dans une situation d'accident, **caractérisé en ce que** le coussin pneumatique (10) est réalisé selon l'une quelconque des revendications 1 à 7.

9. Agencement d'airbag selon la revendication 8,
**caractérisé en ce que**
le au moins un évidement (30) dirige le flux d'air (32) généré par l'agencement de ventilation (44) vers une surface d'assise du coussin de siège.
